# EUROPEAN PATENT APPLICATION

(11) **EP 4 465 389 A1**
(43) Date of publication of application: **20.11.2024**
(21) Application number: 23174251.1
(22) Date of filing: 19.05.2023
(51) Int. Cl.: H01M 4/88

(54) **SIMULTANEOUS SELECTIVE LAMINATION OF ELECTRODE LAYERS**

(71) Applicant: BASF Catalysts Germany GmbH, 30173 Hannover (DE)
(72) Inventor: The designation of the inventor has not yet been filed
(74) Representative: Altmann Stößel Dick Patentanwälte PartG mbB

(57) **Abstract**

The present invention relates to a process for the preparation of catalyst coated membranes comprising
(1) providing a membrane film;
(2) providing a first decal film of which one side is coated with a first electrode material;
(3) providing a second decal film of which one side is coated with a second electrode material;
(4) arranging the membrane film between the first and second decal films, such that the side of the first decal film with the coating of the first electrode material is brought into contact with one side of the membrane film, and the side of the second decal film with the coating of the second electrode material is brought into contact with the opposite side of the membrane film, thus obtaining a stacked arrangement of the membrane film between the first and second decal films;
(5) selectively laminating one or more portions of the stacked arrangement obtained in (4), thus selectively transferring first and second electrode materials from the respective decal film to respectively opposite sides of the membrane film in said one or more portions, and obtaining a membrane film coated with first and second electrode materials on opposite sides thereof in said one or more portions which are selectively laminated;
(6) peeling the first and second decal films off of the membrane film coated with first and second electrode materials in one or more portions thereof as obtained in (5). Furthermore, the present invention relates to a catalyst coated membrane obtained according to the inventive process as well as to its use for electrolysis or as a fuel cell.

## Description

### TECHNICAL FIELD

The present invention relates to a process for the preparation of membrane electrode assemblies, as well as to a catalyst coated membrane obtained by the inventive process and to its use.

### INTRODUCTION

Membrane electrode assemblies are employed for both the electrolysis of water as well as in hydrogen fuel cells which generate electric current using the reverse process. Membrane electrode assemblies are typically prepared by applying (e.g. by spraying) an ink for the anode and an ink for the cathode respectively comprising a catalyst material onto either side of the membrane. For certain applications such as water electrolysis, it is necessary to selectively provide the respective inks only in certain areas of the surface of the membrane, which is particularly challenging due to the low viscosity of such inks as well as due to the fact that the membrane inevitably swells due to the solvent contained in the respective inks.

Alternatives have thus been developed to avoid said disadvantages, wherein decal-processes offer the advantage of not requiring a solvent for the application of an electrode material onto a membrane.

Thus, Asad Mehmood and Heung Yong Ha, "An efficient decal transfer method using a roll-press to fabricate membrane electrode assemblies for direct methanol fuel cells", International Journal of Hydrogen Energy, volume 37, issue 23, December 2012, pages 18463-18470, relates to roll-press laminated catalyst layers obtained from a decal process on a calender/roll-press. With regard to decal processes, Xiaolu Liang et al. "A modified decal method for preparing the membrane electrode assembly of proton exchange membrane fuel cell", Fuel 139 (2015), pages 393-400, discusses the hot peel of decal carrier foils. A. Stähler et al. "Reusability of decal substrates for the fabrication of catalyst coated membranes", International Journal of Adhesion and Adhesives, volume 98, April 2020, 102473, on the other hand, discusses reusing spent decal carrier foils for reducing decal production scrap.

Amit C. Bhosale et al., "Preparation methods of membrane electrode assemblies for proton exchange membrane fuel cells and unitized regenerative fuel cells: A review", Renewable and Sustainable Energy Reviews, volume 133, November 2020, 110286, is a general review article on different processes beside decal lamination which are used to manufacture catalyst coated membranes (CCMs).

Despite the advantages offered by such alternative methods for the application of electrode materials onto a membrane for producing membrane electrode assemblies, there remains a need for an improved process both with regard to their efficiency as well as with regard to their environmental impact.

### DETAILED DESCRIPTION

It was the object of the present invention to provide a process for the preparation of membrane electrode assemblies which allows for the effective and precise coating of membranes for producing membrane electrode assemblies in a facile and environmentally friendly process, as well as to provide high quality membrane electrode assemblies which are obtainable according to such a process. Said object is achieved by the process of the present invention, and the membrane electrode assemblies obtainable from said process. In particular, it has surprisingly been found that a process for the selective and precise coating of membranes in the production of membrane electrode assemblies is achieved in the inventive process by allowing for the selective lamination of electrode materials on opposing sides of a membrane in a highly efficient manner. Thus, it has for example surprisingly been found that by applying a stamp structure on only one side of a three layer assembly of an anode, a membrane, and a cathode, the electrodes may be transferred onto the membrane in accurate alignment. Furthermore, it has been found that membrane electrode assemblies of a high quality may be obtained in a highly cost-efficient yet environmentally friendly manner.

Thus, the present invention relates to a process for the preparation of catalyst coated membranes comprising
(1) providing a membrane film;
(2) providing a first decal film of which one side is coated with a first electrode material;
(3) providing a second decal film of which one side is coated with a second electrode material;
(4) arranging the membrane film between the first and second decal films, such that the side of the first decal film with the coating of the first electrode material is brought into contact with one side of the membrane film, and the side of the second decal film with the coating of the second electrode material is brought into contact with the opposite side of the membrane film, thus obtaining a stacked arrangement of the membrane film between the first and second decal films;
(5) selectively laminating one or more portions of the stacked arrangement obtained in (4), thus selectively transferring first and second electrode materials from the respective decal film to respectively opposite sides of the membrane film in said one or more portions, and obtaining a membrane film coated with first and second electrode materials on opposite sides thereof in said one or more portions which are selectively laminated;
(6) peeling the first and second decal films off of the membrane film coated with first and second electrode materials in one or more portions thereof as obtained in (5).

It is preferred that the portions of the membrane film obtained (6) which are not coated with first and second electrode materials display a width in the range of from 1 to 100 mm, more preferably from 5 to 75 mm, more preferably from 10 to 50 mm, more preferably from 15 to 30 mm.

It is preferred that the process further comprises (7) sectioning the membrane film as obtained in (6), thus obtaining individual membrane electrode assemblies.

According to the present invention, it is preferred that sectioning is performed in areas of the membrane which are not coated with first and second electrode materials. Furthermore, as concerns the membrane rim of the sectioned material, said membrane rim not being coated with first and second materials, it is preferably in the range of from 1 to 100 mm in width, more preferably from 2 to 80 mm, more preferably from 4 to 60 mm, more preferably from 6 to 50 mm, and more preferably from 8 to 40 mm. Yet further, it is preferred that sectioning is achieved by cutting or perforating the membrane. It is particularly preferred that sectioning is achieved by perforating the membrane, more preferably by perforating the membrane for obtaining a tear-off perforation at which the sections of the membrane may subsequently be separated by applying mechanical strain to the perforated area such as to induce the membrane to selectively tear in that area.

It is preferred that the process is performed as a continuous process, wherein more preferably each of the membrane film in (1) and the first and second decal films in (2) are continuously provided from rolls of the respective film.

It is preferred that selective lamination in (5) comprises
(5.1) feeding the stacked arrangement obtained in (4) into a roll laminator, wherein the roll laminator comprises, more preferably consists of, a first roller and a second roller, wherein at least one of the first and second rollers is an embossing roller, and wherein the gap between the first and second rollers is adjusted such, that the one or more embossing nips are smaller than the total thickness of the stacked arrangement obtained in (4);
(5.2) laminating the stacked arrangement obtained in (4) in the one or more embossing nips, thus transferring first and second electrode materials from the respective decal film to respectively opposite sides of the membrane film in the one or more portions of the stacked arrangement which are laminated in said one or more embossing nips, and obtaining a membrane film coated with first and second electrode materials on opposite sides thereof in said one or more portions which are laminated,

The term "embossing nips" within the meaning of the present invention designates the portions of the gap between an embossing roller and a second roller which are formed in those areas in which a protruded area of the embossing roller and the second roller opposite thereto form the gap. According to particular and preferred embodiments of the present invention wherein a roll laminator comprising, preferably consisting of, two embossing rollers is employed, the embossing nips then designate the portions of the gap between the embossing rollers which are formed in those areas in which a protruded area of the first embossing roller and protruded area of the second roller opposite thereto form the gap.

According to the present invention, it is preferred that the maximum line force between the rollers during the selective lamination is in the range of from 5 to 750 N/mm, more preferably from 20 to 500 N/mm, more preferably from 50 to 350 N/mm, more preferably from 80 to 250 N/mm, more preferably from 100 to 200 N/mm, more preferably from 120 to 180 N/mm, and more preferably from 140 to 160 N/mm. Furthermore, it is preferred that in (5.1) the stacked arrangement is feed into the roll laminator at a rate of 0.1 to 100 m/min, more preferably from 0.5 to 80 m/min, more preferably from 1 to 60 m/min, more preferably from 2 to 50 m/min, more preferably from 3 to 40 m/min, and more preferably from 5 to 30 m/min. Yet further, it is preferred that the first and/or second roller is an embossing roller, wherein the embossing roller comprises, more preferably consists of, steel, more preferably polished steel, more preferably hard chromated copper on steel, more preferably hard chromated steel. In addition thereto, it is preferred that the first roller is an embossing roller and the second roller is a backing roller, wherein more preferably the backing roller consists of a metal core and a surface layer provided thereon, wherein the surface layer comprises, more preferably consists of, an elastic material, wherein more preferably the elastic material comprises, more preferably consists of, rubber.

According to the present invention, it is further preferred that the first and second rollers are embossing rollers, wherein the embossing motif of the first and second embossing rollers are not complementary to each other, wherein more preferably the embossing motif of the first and second embossing rollers are the mirror relief of each other, wherein the embossing rollers are aligned such, that when feeding the stacked arrangement obtained in (4) into the rollers, the relief of one side of the gap between the embossing rollers is at all times the mirror of the relief of the opposite side of the gap. Furthermore, it is preferred that the embossing motif comprises, more preferably consists of, one or more stamps, more preferably of one or more stamps of equal height relative to the embossing nip. Yet further, it is preferred that the surface area of the one or more stamps is in the range of from 1 to 15,000 cm², more preferably from 5 to 10,000 cm², more preferably from 10 to 7,000 cm², more preferably from 50 to 6,000 cm², more preferably from 100 to 4,000 cm², more preferably from 300 to 3,000 cm², and more preferably from 500 to 1,500 cm².

According to the present invention, it is yet further preferred that the size of the embossing nips is from 20 to 97% of the total thickness of the stacked arrangement obtained in (3), more preferably from 20 to 97%, more preferably from 40 to 95%, more preferably from 60 to 90%, more preferably from 70 to 85%, and more preferably from 75 to 80%.

Furthermore, it is preferred that the size of the embossing nips is in the range of from 50 to 1,000 µm, more preferably from 60 to 700 µm, more preferably from 80 to 500 µm, more preferably from 100 to 350 µm, more preferably from 120 to 300 µm, more preferably from 140 to 280 µm, more preferably from 160 to 240 µm, and more preferably from 180 to 220 µm.

Yet further, it is preferred that at least one of the first and second rollers is heated. Furthermore, it is preferred that the first and/or second roller is an embossing roller, wherein the embossing roller or at least one of the embossing rollers is heated. Yet further it is preferred that the first and second rollers are embossing rollers, wherein at least one of the embossing rollers is heated, wherein more preferably both of the embossing rollers are heated. In this regard, it is preferred that the one or more rollers which are heated are heated to a temperature in the range of from 40 to 200 °C, more preferably from 60 to 170 °C, more preferably from 80 to 150 °C, more preferably from 90 to 130 °C, more preferably from 95 to 125 °C, more preferably from 100 to 120 °C, and more preferably from 105 to 115 °C, wherein the temperature is the temperature at the surface of the one or more rollers which are heated. Furthermore, it is preferred that the first and second rollers are embossing rollers, wherein at least one of the embossing rollers is heated, wherein more preferably both of the embossing rollers are heated.

According the present invention, It is preferred that the total thickness of the stacked arrangement obtained in (3) is in the range of from 80 to 500 µm, more preferably from 100 to 400 µm, more preferably from 150 to 320 µm, and more preferably from 200 to 250 µm.

It is preferred that the thickness of the membrane film is in the range of from 20 to 500 µm, more preferably from 40 to 250 µm, more preferably from 50 to 200 µm, more preferably from 60 to 180 µm, more preferably from 70 to 150 µm, and more preferably from 800 to 130 µm.

It is preferred that, independently from one another, the thickness of the first and second decal films is in the range of from 10 to 200 µm, more preferably from 20 to 120 µm, more preferably from 30 to 80 µm, and more preferably from 40 to 60 µm.

It is preferred that the total width of the stacked arrangement obtained in (3) is in the range of from 1 to 160 cm, more preferably from 1 to 120 cm, more preferably from 2 to 100 cm, more preferably from 3 to 80 cm, more preferably from 5 to 60 cm, and more preferably from 6 to 50 cm.

It is preferred that the width of the membrane film is in the range of from 1 to 160 cm, more preferably from 1 to 120 cm, more preferably from 2 to 100 cm, more preferably from 3 to 80 cm, more preferably from 5 to 60 cm, and more preferably from 6 to 50 cm.

It is preferred that, independently from one another, the width of the first and second decal films is in the range of from 1 to 160 cm, more preferably from 1 to 120 cm, more preferably from 2 to 100 cm, more preferably from 3 to 80 cm, more preferably from 5 to 60 cm, and more preferably from 6 to 50 cm.

It is preferred that in (5) the one or more selectively laminated portions constitute 20 to 90% of the surface of the stacked arrangement obtained in (4), more preferably 30 to 80%, more preferably 40 to 70%, and more preferably 50 to 60%.

It is preferred that the membrane film provided in (1) comprises, more preferably consists of, a ionomer membrane, more preferably a polymer electrolyte membrane, more preferably a proton exchange membrane, more preferably a proton exchange membrane comprising, preferably consisting of, a sulfonated polymer membrane, more preferably a proton exchange membrane comprising, preferably consisting of, a sulfonated tetrafluoroethylene based polymer membrane and/or a perfluorosulfonic acid based polymer membrane, wherein more preferably the membrane film provided in (1) comprises, more preferably consists of, a sulfonated tetrafluoroethylene based fluoropolymer-copolymer and or of a perfluorosulfonic acid ionomer membrane.

It is preferred that the first electrode material comprises Pt, wherein more preferably the first electrode material comprises, more preferably consists of, platinum black, more preferably platinum on a carbon support.

It is preferred that the platinum loading of the first electrode material on the first decal film is in the range of from 0.01 to 5 mg/cm² platinum, more preferably from 0.05 to 4 mg/cm², more preferably from 0.1 to 3 mg/cm², more preferably from 0.2 to 2.5 mg/cm², more preferably from 0.25 to 2 mg/cm², more preferably from 0.3 to 1.5 mg/cm², and more preferably from 0.4 to 1.2 mg/cm².

It is preferred that the second electrode material comprises Ir, wherein more preferably the second electrode material comprises, more preferably consists of, IrO₂.

It is preferred that the iridium loading of the second electrode material on the second decal film is in the range of from 0.01 to 5 mg/cm² iridium, more preferably from 0.05 to 4 mg/cm², more preferably from 0.1 to 3 mg/cm², more preferably from 0.2 to 2.5 mg/cm², more preferably from 0.3 to 2 mg/cm², more preferably from 0.4 to 1.5 mg/cm², and more preferably from 0.5 to 1.2 mg/cm².

It is preferred that the process further comprises (8) recycling of the first and second decal films obtained in (6) after peeling off from the membrane film.

According to the present invention, there is no particular restriction as to how the first and second decal films are respectively recycled. Thus, by way of example, recycling may be achieved by direct recycling of catalyst particles contained in the respective electrode material by (i) washing off the electrode material from decal film, (ii) solid-liquid separation of catalyst particles, and (iii) reusing of 10 to 30 wt.-% of the catalyst particles obtained in (ii) in the preparation of fresh catalyst coating ink for coating fresh catalyst as the respective electrode material on a decal carrier film. As an alternative example, recycling may be achieved by washing off the electrode material from decal film and feeding the obtained liquid as a starting material in a metal refining and purification process. In the latter case, the catalyst particles initially contained in the respective electrode materials are destroyed and the respective catalyst may be employed as a feedstock in a catalyst production process, and in particular in the preparation of fresh catalyst coating ink for coating fresh catalyst as the respective electrode material on a decal carrier film.

According to the present invention, it is preferred that recycling in (8) comprises recycling of the residual first and second electrode materials remaining on the first and second decal films obtained in (6) after peeling off from the membrane film, wherein more preferably one or more catalyst materials contained in the first and second electrode materials are respectively recycled, wherein more preferably one or more catalyst materials contained in the first and second electrode materials are respectively recycled for producing first and second decal films as provided in (2).

Furthermore, it is preferred that recycling in (8) comprises recycling of the first and second decal films obtained in (6) after peeling off from the membrane film, wherein more preferably the first and second decal films are respectively recycled for producing first and second decal films as provided in (2).

In addition to the inventive process, the present invention also relates to a catalyst coated membrane obtained according to any of the particular and preferred embodiments of the inventive process.

Furthermore, the present invention also relates to the use of a catalyst coated membrane according to any of the particular and preferred embodiments of the present invention for electrolysis or as a fuel cell, preferably for the electrolysis of water or as a hydrogen fuel cell.

The present invention is further illustrated by the following set of embodiments and combinations of embodiments resulting from the dependencies and back-references as indicated. In particular, it is noted that in each instance where a range of embodiments is mentioned, for example in the context of a term such as "The process accordingly to any one of embodiments 1 to 4", every embodiment in this range is meant to be explicitly disclosed for the skilled person i.e. the wording of this term is to be understood by the skilled person as being synonymous to "The process according to any one of embodiments 1, 2, 3 and 4". Further, it is explicitly noted that the following set of embodiments is not the set of claims determining the extent of protection, but represent a suitably structured part of the description directed to general and preferred aspects of the present invention.
1. Process for the preparation of catalyst coated membranes comprising
   (1) providing a membrane film;
   (2) providing a first decal film of which one side is coated with a first electrode material;
   (3) providing a second decal film of which one side is coated with a second electrode material;
   (4) arranging the membrane film between the first and second decal films, such that the side of the first decal film with the coating of the first electrode material is brought into contact with one side of the membrane film, and the side of the second decal film with the coating of the second electrode material is brought into contact with the opposite side of the membrane film, thus obtaining a stacked arrangement of the membrane film between the first and second decal films;
   (5) selectively laminating one or more portions of the stacked arrangement obtained in (4), thus selectively transferring first and second electrode materials from the respective decal film to respectively opposite sides of the membrane film in said one or more portions, and obtaining a membrane film coated with first and second electrode materials on opposite sides thereof in said one or more portions which are selectively laminated;
   (6) peeling the first and second decal films off of the membrane film coated with first and second electrode materials in one or more portions thereof as obtained in (5).
2. The process of embodiment 1, wherein the portions of the membrane film obtained (6) which are not coated with first and second electrode materials display a width in the range of from 1 to 100 mm, preferably from 5 to 75 mm, more preferably from 10 to 50 mm, more preferably from 15 to 30 mm.
3. The process of embodiment 1 or 2, wherein the process further comprises (7) sectioning the membrane film as obtained in (6), thus obtaining individual membrane electrode assemblies.
4. The process of embodiment 3, wherein sectioning is performed in areas of the membrane which are not coated with first and second electrode materials.
5. The process of embodiment 4, wherein the membrane rim of the sectioned material, said membrane rim not being coated with first and second materials, is in the range of from 1 to 100 mm in width, preferably from 2 to 80 mm, more preferably from 4 to 60 mm, more preferably from 6 to 50 mm, and more preferably from 8 to 40 mm.
6. The process of any of embodiments 3 to 5, wherein sectioning is achieved by cutting or perforating the membrane.
7. The process of any of embodiments 3 to 6, wherein sectioning is achieved by perforating the membrane, preferably by perforating the membrane for obtaining a tear-off perforation at which the sections of the membrane may subsequently be separated by applying mechanical strain to the perforated area such as to induce the membrane to selectively tear in that area.
8. The process of any of embodiments 1 to 7, wherein the process is performed as a continuous process.
9. The process of embodiment 8, wherein each of the membrane film in (1) and the first and second decal films in (2) are continuously provided from rolls of the respective film.
10. The process of any of embodiments 1 to 9, wherein selective lamination in (5) comprises
   (5.1) feeding the stacked arrangement obtained in (4) into a roll laminator, wherein the roll laminator comprises, preferably consists of, a first roller and a second roller, wherein at least one of the first and second rollers is an embossing roller, and wherein the gap between the first and second rollers is adjusted such, that the one or more embossing nips are smaller than the total thickness of the stacked arrangement obtained in (4);
   (5.2) laminating the stacked arrangement obtained in (4) in the one or more embossing nips, thus transferring first and second electrode materials from the respective decal film to respectively opposite sides of the membrane film in the one or more portions of the stacked arrangement which are laminated in said one or more embossing nips, and obtaining a membrane film coated with first and second electrode materials on opposite sides thereof in said one or more portions which are laminated,
11. The process of embodiment 10, wherein the maximum line force between the rollers during the selective lamination is in the range of from 5 to 750 N/mm, preferably from 20 to 500 N/mm, more preferably from 50 to 350 N/mm, more preferably from 80 to 250 N/mm, more preferably from 100 to 200 N/mm, more preferably from 120 to 180 N/mm, and more preferably from 140 to 160 N/mm.
12. The process of embodiment 10 or 11, wherein in (5.1) the stacked arrangement is feed into the roll laminator at a rate of 0.1 to 100 m/min, preferably from 0.5 to 80 m/min, more preferably from 1 to 60 m/min, more preferably from 2 to 50 m/min, more preferably from 3 to 40 m/min, and more preferably from 5 to 30 m/min.
13. The process of any of embodiments 10 to 12, wherein the first and/or second roller is an embossing roller, wherein the embossing roller comprises, preferably consists of, steel, preferably polished steel, more preferably hard chromated copper on steel, more preferably hard chromated steel.
14. The process of any of embodiments 10 to 13, wherein the first roller is an embossing roller and the second roller is a backing roller.
15. The process of embodiment 14, wherein the backing roller consists of a metal core and a surface layer provided thereon, wherein the surface layer comprises, preferably consists of, an elastic material, wherein preferably the elastic material comprises, preferably consists of, rubber.
16. The process of any of embodiments 10 to 13, wherein the first and second rollers are embossing rollers, wherein the embossing motif of the first and second embossing rollers are not complementary to each other, wherein preferably the embossing motif of the first and second embossing rollers are the mirror relief of each other, wherein the embossing rollers are aligned such, that when feeding the stacked arrangement obtained in (4) into the rollers, the relief of one side of the gap between the embossing rollers is at all times the mirror of the relief of the opposite side of the gap.
17. The process of embodiment 16, wherein the embossing motif comprises, preferably consists of, one or more stamps, preferably of one or more stamps of equal height relative to the embossing nip.
18. The process of embodiment 17, wherein the surface area of the one or more stamps is in the range of from 1 to 15,000 cm², preferably from 5 to 10,000 cm², more preferably from 10 to 7,000 cm², more preferably from 50 to 6,000 cm², more preferably from 100 to 4,000 cm², more preferably from 300 to 3,000 cm², and more preferably from 500 to 1,500 cm².
19. The process of any of embodiments 10 to 18, wherein the size of the embossing nips is from 20 to 97% of the total thickness of the stacked arrangement obtained in (3), preferably from 20 to 97%, more preferably from 40 to 95%, more preferably from 60 to 90%, more preferably from 70 to 85%, and more preferably from 75 to 80%.
20. The process of any of embodiments 10 to 19, wherein the size of the embossing nips is in the range of from 50 to 1,000 µm, preferably from 60 to 700 µm, more preferably from 80 to 500 µm, more preferably from 100 to 350 µm, more preferably from 120 to 300 µm, more preferably from 140 to 280 µm, more preferably from 160 to 240 µm, and more preferably from 180 to 220 µm.
21. The process of any of embodiments 10 to 20, wherein at least one of the first and second rollers is heated.
22. The process of embodiment 21, wherein the first and/or second roller is an embossing roller, wherein the embossing roller or at least one of the embossing rollers is heated.
23. The process of embodiment 22, wherein the first and second rollers are embossing rollers, wherein at least one of the embossing rollers is heated, wherein preferably both of the embossing rollers are heated.
24. The process of embodiment 23, wherein the one or more rollers which are heated are heated to a temperature in the range of from 40 to 200 °C, preferably from 60 to 170 °C, more preferably from 80 to 150 °C, more preferably from 90 to 130 °C, more preferably from 95 to 125 °C, more preferably from 100 to 120 °C, and more preferably from 105 to 115 °C, wherein the temperature is the temperature at the surface of the one or more rollers which are heated.
25. The process of embodiment 23 or 24, wherein the first and second rollers are embossing rollers, wherein at least one of the embossing rollers is heated, wherein preferably both of the embossing rollers are heated.
26. The process of any of embodiments 1 to 25, wherein the total thickness of the stacked arrangement obtained in (3) is in the range of from 80 to 500 µm, preferably from 100 to 400 µm, more preferably from 150 to 320 µm, and more preferably from 200 to 250 µm.
27. The process of any of embodiments 1 to 26, wherein the thickness of the membrane film is in the range of from 20 to 500 µm, preferably from 40 to 250 µm, more preferably from 50 to 200 µm, more preferably from 60 to 180 µm, more preferably from 70 to 150 µm, and more preferably from 800 to 130 µm.
28. The process of any of embodiments 1 to 27, wherein independently from one another, the thickness of the first and second decal films is in the range of from 10 to 200 µm, preferably from 20 to 120 µm, more preferably from 30 to 80 µm, and more preferably from 40 to 60 µm.
29. The process of any of embodiments 1 to 28, wherein the total width of the stacked arrangement obtained in (3) is in the range of from 1 to 160 cm, preferably from 1 to 120 cm, more preferably from 2 to 100 cm, more preferably from 3 to 80 cm, more preferably from 5 to 60 cm, and more preferably from 6 to 50 cm.
30. The process of any of embodiments 1 to 29, wherein the width of the membrane film is in the range of from 1 to 160 cm, preferably from 1 to 120 cm, more preferably from 2 to 100 cm, more preferably from 3 to 80 cm, more preferably from 5 to 60 cm, and more preferably from 6 to 50 cm.
31. The process of any of embodiments 1 to 30, wherein independently from one another, the width of the first and second decal films is in the range of from 1 to 160 cm, preferably from 1 to 120 cm, more preferably from 2 to 100 cm, more preferably from 3 to 80 cm, more preferably from 5 to 60 cm, and more preferably from 6 to 50 cm.
32. The process of any of embodiments 1 to 31, wherein in (5) the one or more selectively laminated portions constitute 20 to 90% of the surface of the stacked arrangement obtained in (4), preferably 30 to 80%, more preferably 40 to 70%, and more preferably 50 to 60%.
33. The process of any of embodiments 1 to 32, wherein the membrane film provided in (1) comprises, preferably consists of, a ionomer membrane, preferably a polymer electrolyte membrane, more preferably a proton exchange membrane, more preferably a proton exchange membrane comprising, preferably consisting of, a sulfonated polymer membrane, more preferably a proton exchange membrane comprising, preferably consisting of, a sulfonated tetrafluoroethylene based polymer membrane and/or a perfluorosulfonic acid based polymer membrane, wherein more preferably the membrane film provided in (1) comprises, preferably consists of, a sulfonated tetrafluoroethylene based fluoropolymer-copolymer and or of a perfluorosulfonic acid ionomer membrane.
34. The process of any of embodiments 1 to 33, wherein the first electrode material comprises Pt, wherein preferably the first electrode material comprises, more preferably consists of, platinum black, more preferably platinum on a carbon support.
35. The process of any of embodiments 1 to 34, wherein the platinum loading of the first electrode material on the first decal film is in the range of from 0.01 to 5 mg/cm² platinum, preferably from 0.05 to 4 mg/cm², more preferably from 0.1 to 3 mg/cm², more preferably from 0.2 to 2.5 mg/cm², more preferably from 0.25 to 2 mg/cm², more preferably from 0.3 to 1.5 mg/cm², and more preferably from 0.4 to 1.2 mg/cm².
36. The process of any of embodiments 1 to 35, wherein the second electrode material comprises Ir, wherein more preferably the second electrode material comprises, preferably consists of, IrO₂.
37. The process of any of embodiments 1 to 36, wherein the iridium loading of the second electrode material on the second decal film is in the range of from 0.01 to 5 mg/cm² iridium, preferably from 0.05 to 4 mg/cm², more preferably from 0.1 to 3 mg/cm², more preferably from 0.2 to 2.5 mg/cm², more preferably from 0.3 to 2 mg/cm², more preferably from 0.4 to 1.5 mg/cm², and more preferably from 0.5 to 1.2 mg/cm².
38. The process of any of embodiments 1 to 37, wherein the process further comprises (8) recycling of the first and second decal films obtained in (6) after peeling off from the membrane film.
39. The process of embodiment 38, wherein recycling in (8) comprises recycling of the residual first and second electrode materials remaining on the first and second decal films obtained in (6) after peeling off from the membrane film, wherein preferably one or more catalyst materials contained in the first and second electrode materials are respectively recycled, wherein more preferably one or more catalyst materials contained in the first and second electrode materials are respectively recycled for producing first and second decal films as provided in (2).
40. The process of embodiment 38 or 39, wherein recycling in (8) comprises recycling of the first and second decal films obtained in (6) after peeling off from the membrane film, wherein preferably the first and second decal films are respectively recycled for producing first and second decal films as provided in (2).
41. A catalyst coated membrane obtained according to the process of any of embodiments 1 to 40.
42. Use of a catalyst coated membrane according to embodiment 39 for electrolysis or as a fuel cell, preferably for the electrolysis of water or as a hydrogen fuel cell.

### DESCRIPTION OF THE FIGURES

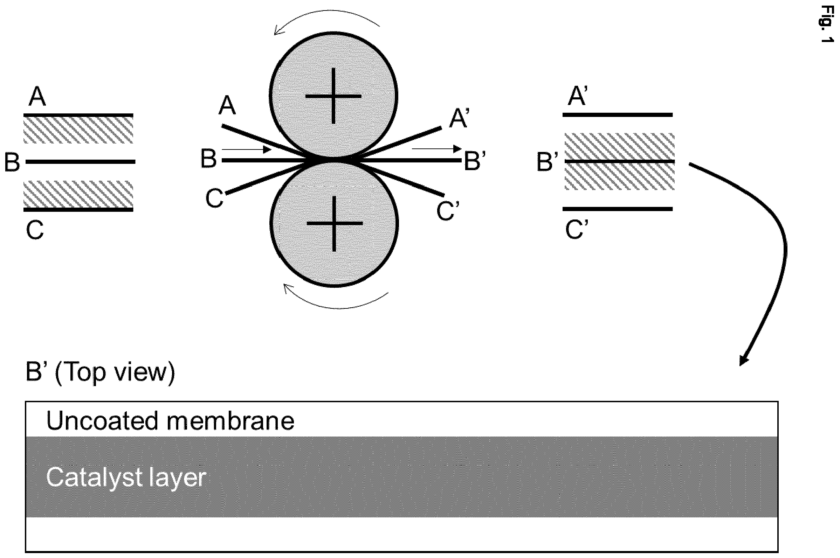

- Figure 1: displays the concept of the continuous lamination of a decal film onto opposite sides of a membrane. In the figure, B stands for the membrane film and A and C stand for the decal films coated with electrode material, respectively, wherein after the lamination step, A' and C' stand for the decal films as detached from the membrane B' after lamination, the electrode having been entirely transferred from the decal films A and B to the membrane by way of the lamination.

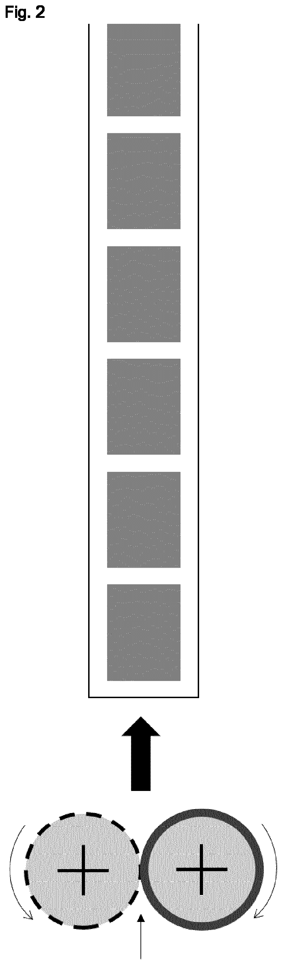

- Figure 2: displays the continuous lamination of a decal film onto opposite sides of a membrane by selective lamination using an assembly of an embossing roller and a soft backing roller, as well as the top view of the membrane electrode assemblies obtained from said lamination step.

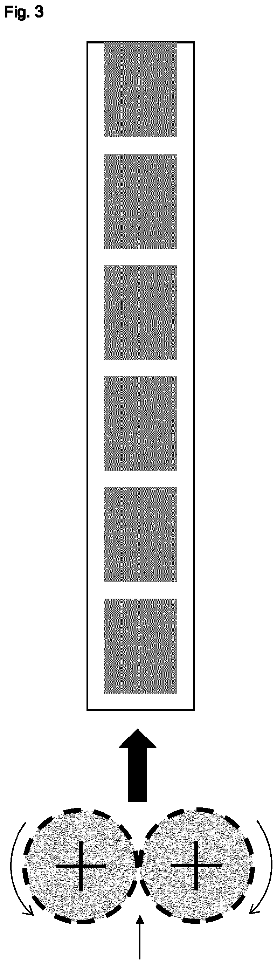

- Figure 3: displays the continuous lamination of a decal film onto opposite sides of a membrane by selective lamination using an assembly of two embossing rollers which are aligned with regard to the stamps on the respective rollers, as well as the top view of the membrane electrode assemblies obtained from said lamination step.

### EXPERIMENTAL SECTION

In the examples, used catalyst layers comprise 1mg/cm² platinum black (BASF SE) on the cathode side and 1mg/cm² Iridium Dioxide (BASF SE) on the anode side and Nation^{®} ionomer (Chemours). Catalyst layers are cast on a 50µm decal carrier foil. Catalyst layer transfer onto the respective proton exchange membranes was carried out on a Calender (Saueressig GKL 300L) with 200mm diameter polished rolls.

### Comparative Example 1: Production of a catalyst coated membrane by lamination

Calender nip was adjusted to 250µm and roll temperature set to 110°C at 15bar pressure. A stack of Nafion 117 membrane (Chemours) cut to 7×7cm², anode layer on decal foil cut to 5×5cm² and cathode layer on decal foil cut to 5×5cm² was passed through the calender at 0.5m/min. After lamination decal foil was peeled off to receive the catalyst coated membrane.

The process described in comparative example 1, requires a cutting step of the decal film which makes accurate alignment of anode and cathode challenging. Further disadvantage is the peel-off of the decal foil after lamination since it is applied as a sheet. Another disadvantage is the fact, that the decal foil can only be used a single time and needs to be wasted as production scrap.

### Example 1: Production of a catalyst coated membrane by selective lamination using an assembly of two embossing rollers

Calender nip was adjusted to 250µm and roll temperature set to 110°C at 15bar pressure. A stack of Nafion 117 membrane (Chemours), anode layer on decal foil and cathode layer on decal foil was passed through the calender with 2 structured and aligned hard rollers at 0.5m/min. The structured rolls contain the shape of the desired active area of the electrolyzer cell as 5×5cm² in this case. After lamination decal foil was peeled off to receive the catalyst coated membrane.

### Example 2: Continuous production of a catalyst coated membrane by selective lamination using an assembly of an embossing roller and a hard backing roller

Calender nip was adjusted to 250µm and roll temperature set to 110°C at 15bar pressure. A stack of Nafion 117 membrane (Chemours), anode layer on decal foil and cathode layer on decal foil was passed through the calender with 1 structured and 1 flat hard roller at 0.5m/min. The structured roll contains the shape of the desired active area of the electrolyzer cell as 5×5cm² in this case. After lamination decal foil was peeled off to receive the catalyst coated membrane.

### Example 3: Continuous production of a catalyst coated membrane by selective lamination using an assembly of an embossing roller and a soft backing roller

Calender nip was adjusted to 100µm and roll temperature set to 110°C at 15bar pressure. A stack of Nafion 117 membrane (Chemours), anode layer on decal foil and cathode layer on decal foil was passed through the calender with 1 structured and 1 flat soft roller at 0.5m/min. The structured roll contains the shape of the desired active area of the electrolyzer cell as 5×5cm² in this case. After lamination decal foil was peeled off to receive the catalyst coated membrane.

The process described in examples 1 to 3 are a continuous process, with simple peel off since the decal foil remains as a continuous foil. Furthermore, the alignment of anode and cathode automatically occurs in the stamping process since anode and cathode layers are only transferred in the area where pressure is applied by the stamp. This also allows all possible two-dimensional shapes that are required for the electrolysis stack.

## Claims

1. Process for the preparation of catalyst coated membranes comprising
(1) providing a membrane film;
(2) providing a first decal film of which one side is coated with a first electrode material;
(3) providing a second decal film of which one side is coated with a second electrode material;
(4) arranging the membrane film between the first and second decal films, such that the side of the first decal film with the coating of the first electrode material is brought into contact with one side of the membrane film, and the side of the second decal film with the coating of the second electrode material is brought into contact with the opposite side of the membrane film, thus obtaining a stacked arrangement of the membrane film between the first and second decal films;
(5) selectively laminating one or more portions of the stacked arrangement obtained in (4), thus selectively transferring first and second electrode materials from the respective decal film to respectively opposite sides of the membrane film in said one or more portions, and obtaining a membrane film coated with first and second electrode materials on opposite sides thereof in said one or more portions which are selectively laminated;
(6) peeling the first and second decal films off of the membrane film coated with first and second electrode materials in one or more portions thereof as obtained in (5).

2. The process of claim 1, wherein the portions of the membrane film obtained (6) which are not coated with first and second electrode materials display a width in the range of from 1 to 100 mm.

3. The process of claim 1 or 2, wherein the process further comprises (7) sectioning the membrane film as obtained in (6), thus obtaining individual membrane electrode assemblies.

4. The process of claim 3, wherein sectioning is performed in areas of the membrane which are not coated with first and second electrode materials, wherein the membrane rim of the sectioned material, said membrane rim not being coated with first and second materials, is in the range of from 1 to 100 mm in width.

5. The process of claim 3 or 4, wherein sectioning is achieved by cutting or perforating the membrane.

6. The process of any of claims 1 to 5, wherein the process is performed as a continuous process.

7. The process of any of claims 1 to 6, wherein selective lamination in (5) comprises
(5.1) feeding the stacked arrangement obtained in (4) into a roll laminator, wherein the roll laminator comprises a first roller and a second roller, wherein at least one of the first and second rollers is an embossing roller, and wherein the gap between the first and second rollers is adjusted such, that the one or more embossing nips are smaller than the total thickness of the stacked arrangement obtained in (4);
(5.2) laminating the stacked arrangement obtained in (4) in the one or more embossing nips, thus transferring first and second electrode materials from the respective decal film to respectively opposite sides of the membrane film in the one or more portions of the stacked arrangement which are laminated in said one or more embossing nips, and obtaining a membrane film coated with first and second electrode materials on opposite sides thereof in said one or more portions which are laminated,

8. The process of claim 7, wherein the maximum line force between the rollers during the selective lamination is in the range of from 5 to 750 N/mm.

9. The process of claim 7 or 8, wherein the first and/or second roller is an embossing roller, wherein the embossing roller comprises steel.

10. The process of any of claims 7 to 9, wherein the first roller is an embossing roller and the second roller is a backing roller.

11. The process of any of claims 7 to 9, wherein the first and second rollers are embossing rollers, wherein the embossing motif of the first and second embossing rollers are not complementary to each other.

12. The process of claim 11, wherein the embossing motif comprises one or more stamps.

13. The process of claim 12, wherein the surface area of the one or more stamps is in the range of from 1 to 15,000 cm².

14. A catalyst coated membrane obtained according to the process of any of claims 1 to 13.

15. Use of a catalyst coated membrane according to claim 14 for electrolysis or as a fuel cell.
